# EUROPÄISCHE PATENTSCHRIFT

(11) **EP 3 608 519 B1**
(45) Veröffentlichungstag und Bekanntmachung des Hinweises auf die Patenterteilung: **09.10.2024**
(21) Anmeldenummer: 19190290.7
(22) Anmeldetag: 06.08.2019
(51) Int. Cl.: F01N 3/08, F01N 3/021, F01N 3/10, F01N 13/00, F01N 3/027, F01N 3/20

(54) **VERFAHREN UND VORRICHTUNG ZUR ABGASNACHBEHANDLUNG EINES VERBRENNUNGSMOTORS**
METHOD AND DEVICE FOR EXHAUSTION TREATMENT OF A COMBUSTION ENGINE
PROCÉDÉ ET DISPOSITIF DE TRAITEMENT D'ÉCHAPPEMENT D'UN MOTEUR À COMBUSTION

(30) Priorität: 07.08.2018 DE 102018119156
(43) Veröffentlichungstag der Anmeldung: 12.02.2020
(73) Patentinhaber: Volkswagen AG, 38440 Wolfsburg (DE)
(72) Erfinder: PAUKNER, Stefan, 38442 Wolfsburg (DE); BARON VON CEUMERN-LINDENSTJERNA, Falk-Christian, 38124 Braunschweig (DE); MANZ, Michael Alexander, 30855 Langenhagen (DE); KAACK, Michael, 38531 Rötgesbüttel (DE)
(74) Vertreter: Gulde & Partner

(56) Entgegenhaltungen:
- DE-A1- 102017 100 892
- US-A1- 2008 282 673

## Beschreibung

Die Erfindung betrifft ein Verfahren zur Abgasnachbehandlung eines Verbrennungsmotors sowie ein Abgasnachbehandlungssystem zur Durchführung eines solchen Verfahrens gemäß den Oberbegriffen der unabhängigen Patentansprüche.

Künftige Abgasgesetzgebungen stellen hohe Anforderungen an motorische Rohemissionen und an die Abgasnachbehandlung von Verbrennungsmotoren. Mit Einführung der Abgasgesetzgebung Euro 6d-Temp müssen die Kraftfahrzeuge die Emissionsgrenzen in einem realitätsnahen Betrieb (Real Driving Emissions) einhalten. Der Einsatz von mehrstufigen Abgasnachbehandlungskonzepten im Ottomotor-Umfeld wirft für neue Abgasvorschriften Fragen hinsichtlich der Regelbarkeit der verschiedenen Abgasnachbehandlungskomponenten sowie der Regelgüte und Betriebsbereitschaft der Abgasnachbehandlungskomponenten auf. Ein Forschungskonzept mit einer Abgasanlage, welche bereits für eine mehrstufige Abgasnachbehandlung vorgesehen ist, zeigt auf, dass hier ein Lambdaregelungskonzept benötigt wird, welches die Besonderheiten der jeweiligen Abgasnachbehandlungskomponenten kennt und diese bei ihrem Regelverhalten berücksichtigt. Weiter besteht die Herausforderung darin, dass jede Abgasnachbehandlungskomponente eigene Randbedingungen für eine optimale Konvertierung der Schadstoffkomponenten im Abgas benötigt, um eine maximal effiziente Abgasnachbehandlung zu ermöglichen. Dabei zeigt sich, dass ein aus dem Stand der Technik bekanntes Lambdaregelungskonzept mit starr ausgelegtem Regelsystem nur suboptimale Emissionsergebnisse liefert.

Aus der DE 10 2010 002 586 A1 ist ein Verfahren zum Betreiben eines Verbrennungsmotors für ein Kraftfahrzeug mit einem Abgassystem bekannt, in welchem mindestens ein Katalysator und wenigstens eine Lambdasonde angeordnet sind. Der Verbrennungsmotor wird nach einem Kaltstart zum Aufheizen des Katalysators im Wechsel mit magerem und fettem Kraftstoff-Luft-Gemisch betrieben. Die Lambdasonde wird nach dem Kaltstart so beheizt, dass sie nach maximal zehn Sekunden betriebsbereit ist und der Verbrennungsmotor mit einer auf einem Signal der Lambdasonde basierenden Zweipunktregelung betrieben wird. Dabei wird ein Wechsel zwischen dem Betrieb mit magerem Kraftstoff-Luft-Gemisch und mit fettem Kraftstoff-Luft-Gemisch jeweils durch das Signal der Lambdasonde ausgelöst.

Aus der DE 10 2013 201 734 A1 ist ein Verfahren zum Betreiben einer Lambdasondenanordnung im Abgassystem eines Verbrennungsmotors mit wenigstens einer ersten Lambdasonde stromaufwärts eines Katalysators und wenigstens einer zweiten Lambdasonde stromabwärts des Katalysators bekannt. Dabei ist die zweite Lambdasonde als Sprungsonde ausgebildet. Dabei werden eine Diagnose eines Kennlinienoffsets der ersten Lambdasonde und gegebenenfalls eine Adaption eines Kennlinienoffsetfehlers vorgenommen. Dabei wird für die Diagnose bei aktiver Lambdaverstellung ein Wert, welcher die Sauerstoffspeicherfähigkeit des Katalysators repräsentiert, und ein weiterer Wert, der die Sauerstoffaustragungsfähigkeit aus dem Katalysator repräsentiert, erfasst. Aus dem Verhältnis von Sauerstoffspeicherfähigkeit und Sauerstoffaustragungsfähigkeit wird ein Kennlinienoffset der ersten Lambdasonde berechnet.

Die EP 2 884 066 A1 offenbart ein Verfahren zur Diagnose eines Gegenstandes wie eines Katalysators oder eines Filters. Um eine besonders genaue Aussage über eine Funktion des Katalysators zu erhalten, ist dabei vorgesehen, dass zur Messung einer katalytischen Reaktivität eine Stirnseite des Katalysators mit einem Prüfmedium mit definierter Zusammensetzung wie Propangas oder Kohlenmonoxid mittels einer Einrichtung durch eine Öffnung beaufschlagt wird und an einer stromabwärts gelegenen Position eine Konzentration von zumindest einem reduzierten oder oxidierten Bestandteil des Prüfmediums nach Passieren des Katalysators gemessen wird. Eine solche Beaufschlagung mit einem definiert zusammengesetzten (Ab-)Gas ist jedoch nur im Laborbetrieb möglich. Daher eignet sich ein solches Verfahren nicht zur Optimierung der Emissionen im realen Fahrbetrieb.

Aus der DE 10 2005 054 733 A1 ist ein Verbrennungsmotor mit einem Abgasnachbehandlungssystem bekannt, in welchem ein Abgasbrenner angeordnet ist, mit welchem das Aufheizen eines Drei-Wege-Katalysators im Abgasnachbehandlungssystem beschleunigt werden kann. Dabei ist vorgesehen, dass der Abgasbrenner in einer Kaltstartphase des Verbrennungsmotors betrieben wird und zumindest solange aktiviert bleibt, bis der Drei-Wege-Katalysator seine Light-Off-Temperatur erreicht hat.

Die DE 10 2012 011 113 A1 offenbart eine Abgasanlage für einen Verbrennungsmotor mit mindestens zwei strömungstechnisch in Reihe geschalteten Abgasnachbehandlungskomponenten, wobei die hintere der beiden Abgasnachbehandlungskomponenten mittels eines elektrischen Heizelements beheizbar ist.

Die DE 10 2017 100 892 A1 offenbart ein Verfahren zur Regeneration eines Partikelfilters in der Abgasanlage eines Verbrennungsmotors. Dabei ist vorgesehen, dass während eines Magerbetriebs des Verbrennungsmotors zur Bereitstellung des Sauerstoffs zur Regeneration des Partikelfilters die durch einen Drei-Wege-Katalysator nicht mehr konvertierbaren Stickoxide in einem Stickoxid-Speicherkatalysator eingelagert werden.

Aus der US 2008 / 282 673 A1 ist ein Verfahren zur Steuerung eines Verbrennungsmotors in einem Hybridantrieb bekannt. Dabei wird zunächst ermittelt, ob Kaltstartbedingungen für den Verbrennungsmotor vorliegen und bei Kaltstartbedingungen ein elektrisch beheizbarer Katalysator aktiviert. Sobald der elektrisch beheizbare Katalysator eine Schwellentemperatur erreicht hat, wird der Verbrennungsmotor zugeschaltet.

Der Erfindung liegt nun die Aufgabe zugrunde, die Konvertierungsleistung des Abgasnachbehandlungssystem weiter zu verbessern und insbesondere die Lambdaregelung derart anzupassen, dass die Effizienz der Abgasnachbehandlungskomponenten weiter gesteigert werden kann.

Erfindungsgemäß wird diese Aufgabe durch ein Verfahren zur Abgasnachbehandlung eines Verbrennungsmotors, dessen Auslass mit einer Abgasanlage verbunden ist, gelöst. Dabei sind in der Abgasanlage in Strömungsrichtung eines Abgases durch die Abgasanlage ein erster Katalysator, stromabwärts des ersten Katalysators ein zweiter Katalysator und stromabwärts des zweiten Katalysators ein dritter Katalysator angeordnet. In einem Abgaskanal der Abgasanlage sind stromaufwärts des ersten Katalysators eine erste Lambdasonde und stromabwärts des ersten Katalysators und stromaufwärts des zweiten Katalysators eine zweite Lambdasonde angeordnet, wobei stromabwärts des zweiten Katalysators und stromaufwärts des dritten Katalysators eine dritte Lambdasonde angeordnet ist. Dabei sind der erste Katalysator und der dritte Katalysator als Drei-Wege-Katalysatoren ausgeführt. Der zweite Katalysator ist als ein mittels eines elektrischen Heizelements aktiv elektrisch beheizbarer Drei-Wege-Katalysator ausgeführt. Das Verfahren umfasst folgende Schritte:
- Aktives Beheizen eines Katalysators stromabwärts des ersten Katalysators;
- Vergleich der Bauteiltemperatur des jeweiligen Katalysators, nämlich des ersten Katalysators, des zweiten Katalysators und des dritten Katalysators, mit der jeweiligen Light-Off-Temperatur des Katalysators;
- Regeln des Verbrennungsluftverhältnisses über die Lambdaregelung des Verbrennungsmotors mittels derjenigen Lambdasonde stromabwärts des letzten Katalysators, welcher seine Light-Off-Temperatur erreicht hat, wobei
- die Lambdaregelung über die erste Lambdasonde erfolgt, wenn keiner der Katalysatoren seine Light-Off-Temperatur erreicht hat, und wobei
- die Lambdaregelung auf die Lambdasonde stromabwärts des zweiten Katalysators ausgeweitet wird, sobald dieser Katalysator seine Light-Off-Temperatur erreicht hat.

Jede Vorrichtung zur katalytischen Abgasreinigung benötigt zum Erreichen einer Wirksamkeit das Überschreiten einer Mindesttemperatur, der sogenannten Light-off-Temperatur. Durch das erfindungsgemäße Verfahren kann zeitnah nach einer passiver Aufheizung bedingt durch den vom Fahrer aufgeprägten Lastzustand ein zusätzliches Katalysatorvolumen zur Konvertierung der Schadstoffkomponenten bereitgestellt werden. Dies ist insbesondere bei höherlastigen Fahrprofilen von Bedeutung, da in diesem Fall die katalytisch wirkende Oberfläche optimal genutzt wird. Durch die Lambdaregelung auf die jeweils letzte Lambdasonde unmittelbar stromabwärts eines Katalysators, welcher seine Light-Off-Temperatur erreicht hat, erfolgt eine möglichst effiziente Nutzung des aktiven Katalysatorvolumens. Dadurch ist eine besonders effiziente Konvertierung der Schadstoffe möglich, wodurch die Endrohremissionen minimiert werden können.

Durch die in den abhängigen Ansprüchen angegebenen Merkmale sind vorteilhafte Verbesserungen und Weiterentwicklungen des im unabhängigen Anspruch angegebenen Verfahrens möglich.

In bevorzugter Ausgestaltung der Erfindung ist vorgesehen, dass ab dem Motorstart des Verbrennungsmotors eine Lambdaregelung durch die erste Lambdasonde erfolgt. Durch eine Lambdaregelung auf ein stöchiometrisches Verbrennungsluftverhältnis in der Kaltstartphase können die Rohemissionen des Verbrennungsmotors minimiert werden, insbesondere dann, wenn noch keiner der Katalysatoren seine Light-Off-Temperatur erreicht hat und eine Abgasnachbehandlung des Abgases durch die Katalysatoren noch nicht möglich ist. Erfindungsgemäß ist vorgesehen, dass die Lambdaregelung auf die Lambdasonde stromabwärts des aktiv beheizbaren Katalysators ausgeweitet wird, sobald dieser Katalysator seine Light-Off-Temperatur erreicht hat. Durch die Ausweitung der Lambdaregelung auf die Lambdasonde stromabwärts des aktiv beheizbaren Katalysators wird das zur Verfügung stehende katalytisch wirksame Abgasnachbehandlungsvolumen vergrößert. Da die Konvertierungsleistung bei noch vergleichsweise kalten Katalysatoren begrenzt ist, kann hierdurch die Effizienz der Abgasnachbehandlung in der Kaltstartphase deutlich verbessert werden. Zudem kann durch das aktive Beheizen sichergestellt werden, dass der aktiv beheizbare Katalysator möglichst schnell nach einem Kaltstart des Verbrennungsmotors seine Light-Off-Temperatur erreicht und somit die im Abgas enthaltenden Schadstoffkomponenten in unlimitierte Abgaskomponenten konvertieren kann.

In weiterer bevorzugter Ausgestaltung der Erfindung ist vorgesehen, dass das aktive Beheizen eingestellt wird, sobald der Katalysator seine Light-Off-Temperatur erreicht hat. Dadurch kann der Energiebedarf des Abgasnachbehandlungssystems reduziert und eine Batterie des Kraftfahrzeuges entlastet werden. Das weitere Aufheizen des Katalysators erfolgt dann durch die exotherme Reaktion der Abgaskomponenten an der Oberfläche des Katalysators.

In einer bevorzugten Ausführungsform des Verfahrens ist vorgesehen, dass die Lambdaregelung durch die erste Lambdasonde und die zweite Lambdasonde stromaufwärts und stromabwärts des ersten Katalysators erfolgt, wenn im Betrieb des Verbrennungsmotors die Temperatur des aktiv beheizbaren Katalysators unter seine Light-Off-Temperatur absinkt. Dadurch kann die Lambdaregelung an das jeweils katalytisch wirksame Volumen der Katalysatoren angepasst werden, sodass die Lambdaregelung auf diejenigen Katalysatoren erfolgt, welche eine effiziente Konvertierung der limitierten gasförmigen Schadstoffkomponenten ermöglichen.

Besonders vorteilhaft ist dabei, wenn das aktive Beheizen wieder aktiviert wird, wenn die Temperatur des aktiv beheizbaren Katalysators im Betrieb des Verbrennungsmotors unter seine Light-Off-Temperatur abgefallen ist. Durch das aktive Beheizen kann der aktiv beheizbare Katalysator wieder auf seine Light-Off-Temperatur aufgeheizt werden, sodass das zur Verfügung stehende katalytisch wirksame Katalysatorvolumen vergrößert wird. Dadurch kann die Konvertierungsleistung des Abgasnachbehandlungssystems verbessert und die Endrohremissionen verringert werden.

In einer vorteilhaften Verbesserung des Verfahrens ist vorgesehen, dass ein zu erwartendes Lastprofil des Verbrennungsmotors ermittelt wird und der aktiv beheizbare Katalysator beheizt wird, wenn anhand des zu erwartenden Lastprofils ein Absinken der Bauteiltemperatur des aktiv beheizbaren Katalysators unter seine Light-Off-Temperatur anzunehmen ist. So kann beispielsweise das Fahrverhalten des Fahrzeugführers ermittelt werden und/oder bevorzugte Fahrstrecken des Fahrzeugführers erkannt werden. Dies kann beispielsweise anhand der Navigationsdaten des Kraftfahrzeuges oder einer Auswertung der Motordaten erfolgen. Wird erkannt, dass der zu erwartende nächste Fahrabschnitt voraussichtlich mit einem Schwachlastbetrieb des Verbrennungsmotors durchfahren wird, bei welchem die Temperatur des elektrisch beheizbaren Katalysators unter seine Light-Off-Temperatur absinkt, so wird der beheizbare Katalysator beheizt, um weiterhin ein größtmögliches aktives Katalysatorvolumen zur Verfügung zu stellen.

Erfindungsgemäß wird ein Abgasnachbehandlungssystem für einen Verbrennungsmotor, welches an einen Auslass des Verbrennungsmotors anschließbar ist, vorgeschlagen. Das Abgasnachbehandlungssystem umfasst eine Abgasanlage, in welcher in Strömungsrichtung eines Abgases durch die Abgasanlage ein erster Katalysator, stromabwärts des ersten Katalysators ein zweiter Katalysator und stromabwärts des zweiten Katalysator ein dritter Katalysator angeordnet sind. Dabei sind in einem Abgaskanal der Abgasanlage stromaufwärts des ersten Katalysator eine erste Lambdasonde und stromabwärts des ersten Katalysators und stromaufwärts des zweiten Katalysators ein zweite Lambdasonde angeordnet ist. Ferner ist stromabwärts des zweiten Katalysators und stromaufwärts des dritten Katalysators eine dritte Lambdasonde angeordnet. Dabei sind der erste Katalysator und der dritte Katalysator als Drei-Wege-Katalysatoren ausgeführt. Der zweite Katalysator ist als ein mittels eines elektrischen Heizelements aktiv elektrisch beheizbarer Drei-Wege-Katalysator ausgeführt.. Das Abgasnachbehandlungssystem umfasst zusätzlich ein Steuergerät, welches dazu eingerichtet ist, ein erfindungsgemäßes Verfahren durchzuführen, wenn ein maschinenlesbarer Programmcode durch das Steuergerät ausgeführt wird. Durch ein solches Abgasnachbehandlungssystem ist es möglich, die Konvertierungsleistung der Katalysatoren zu verbessern und die Emissionen zu verringern.

In einer vorteilhaften Weiterentwicklung der Erfindung ist vorgesehen, dass stromabwärts des ersten Katalysators und stromaufwärts des zweiten Katalysators ein vierter Katalysator angeordnet ist. Durch einen zusätzlichen Katalysator kann das zur Verfügung stehende katalytisch wirksame Katalysatorvolumen vergrößert werden. Dies hat nicht nur in der Kaltstartphase, in welcher die katalytische Aktivität der Katalysatoren noch eingeschränkt ist, Vorteile, sondern auch bei einem Volllastbetrieb des Verbrennungsmotors. Zudem unterliegen Katalysatoren einem Alterungsprozess, wodurch die Konvertierungsleistung über die Lebenszeit des Katalysators abnimmt. Durch einen zusätzlichen Katalysator wird hier eine Reserve geschaffen, welche dafür sorgt, dass auch bei einer deutlichen Alterung der Katalysatoren noch ein hinreichendes Katalysatorvolumen vorliegt, um in allen Betriebssituationen des Verbrennungsmotors eine vollständige Konvertierung der limitierten Abgaskomponenten zu ermöglichen.

Besonders bevorzugt ist dabei, wenn der vierte Katalysator im Wesentlichen frei von einer sauerstoffspeicherfähigen Komponente ausgeführt ist. Durch eine Ausführung des vierten Katalysators mit einem Washcoat, welcher im Wesentlichen frei von einer sauerstoffspeicherfähigen Komponente ausgeführt ist, können der vierte Katalysator und der zweite Katalysator gemeinsam über eine Lambdasonde geregelt werden. Zudem wird die Regelung nicht durch das Befüllen und Entleeren eines zusätzlichen Sauerstoffspeichers verlangsamt, wodurch die Effizienz der Abgasnachbehandlung weiter gesteigert werden kann.

Erfindungsgemäß ist vorgesehen, dass der aktiv beheizbare Katalysator ein elektrisches Heizelement umfasst. Ein elektrisches Heizelement, insbesondere eine elektrische Heizscheibe, kann einfach und kostengünstig in den aktiv beheizbaren Katalysator integriert werden. Alternativ kann ein solches Heizelement dem aktiv beheizbaren Katalysator unmittelbar vorgeschaltet werden. Ein elektrisches Heizelement hat gegenüber dem Beheizen mittels eines Abgasbrenners den Vorteil, dass es vergleichsweise wenig Bauraum benötigt und somit einfach und mit geringen Mehrkosten in die Abgasanlage integriert werden kann.

In einer vorteilhaften Verbesserung des Abgasnachbehandlungssystems ist vorgesehen, dass die erste Lambdasonde als Breitbandsonde und die weiteren Lambdasonden jeweils als Sprungsonden ausgeführt sind. Durch eine Breitbandsonde kann eine quantitative Bestimmung des Verbrennungsluftverhältnisses im Abgaskanal erfolgen. Durch die Sprungsonden kann ein Durchbruch durch den jeweiligen Katalysator erkannt werden, um im Rahmen der Lambdaregelung das Verbrennungsluftverhältnis entsprechend anzupassen.

In einer bevorzugten Ausführungsform der Erfindung ist vorgesehen, dass in der Abgasanlage ein Temperatursensor angeordnet ist. Durch einen Temperatursensor in der Abgasanlage kann die Abgastemperatur und/oder die Bauteiltemperatur eines Katalysators ermittelt werden. Dadurch ist es leichter zu erkennen, ob der jeweilige Katalysator seine Light-Off-Temperatur erreicht hat. Insbesondere kann der Temperatursensor auch genutzt werden, um in einem Berechnungsmodell zur Bestimmung der Bauteiltemperaturen Informationen zu liefern und das Berechnungsmodell zu verbessern.

Die verschiedenen in dieser Anmeldung genannten Ausführungsformen der Erfindung sind, sofern im Einzelfall nicht anders ausgeführt, mit Vorteil miteinander kombinierbar.

Die Erfindung wird nachfolgend in Ausführungsbeispielen anhand der zugehörigen Zeichnungen erläutert. Es zeigen:
- Figur 1: ein Ausführungsbeispiel eines Verbrennungsmotors mit einem erfindungsgemäßen Abgasnachbehandlungssystem.
- Figur 2: ein weiteres Ausführungsbeispiel für einen Verbrennungsmotor mit einem erfindungsgemäßen Abgasnachbehandlungssystem; und
- Figur 3: ein Ablaufdiagramm zur Durchführung eines erfindungsgemäßen Verfahrens zur Abgasnachbehandlung eines Verbrennungsmotors.

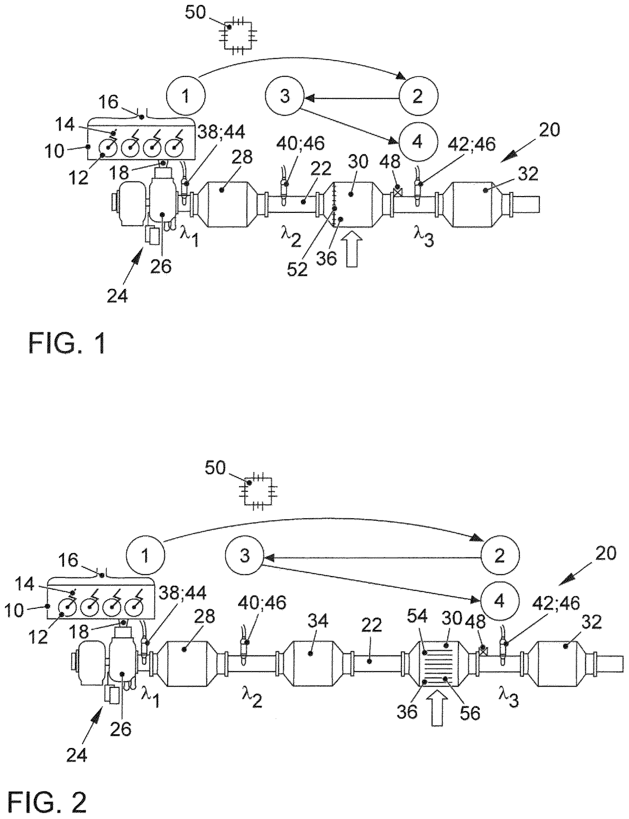

Figur 1 zeigt einen Verbrennungsmotor 10 mit einem Abgasnachbehandlungssystem in einer schematischen Darstellung. Der Verbrennungsmotor 10 weist eine Mehrzahl von Brennräumen 12 auf, an welchen jeweils eine Zündkerze 14 angeordnet ist. Der Verbrennungsmotor 10 weist einen Einlass 16 auf, mit welchem der Verbrennungsmotor 10 mit einem aus Gründen der Übersichtlichkeit nicht dargestellten Luftversorgungssystem verbindbar ist. Der Verbrennungsmotor 10 weist ferner einen Auslass 18 auf, mit welchem der Verbrennungsmotor 10 mit einer Abgasanlage 20 verbunden ist, derart, dass ein Abgas aus den Brennräumen 12 des Verbrennungsmotors 10 in die Abgasanlage 20 geleitet werden kann. Die Abgasanlage 20 umfasst einen Abgaskanal 22, in welchem in Strömungsrichtung eines Abgases des Verbrennungsmotors 10 durch den Abgaskanal 22 eine Turbine 26 eines Abgasturboladers 24, stromabwärts der Turbine 26 ein erster Katalysator 28, stromabwärts des ersten Katalysators 28 ein zweiter Katalysator 30 und weiter stromabwärts ein dritter Katalysator 32 angeordnet sind. Der erste Katalysator 28 ist vorzugsweise als Drei-Wege-Katalysator ausgeführt und in einer motornahen Position in der Abgasanlage 20 angeordnet. Unter einer motornahen Position wird in diesem Zusammenhang eine Position mit einer Abgaslauflänge von weniger als 80 cm, vorzugsweise von weniger als 50 cm ab dem Auslass 18 des Verbrennungsmotors 10 verstanden. Der zweite Katalysator 30 ist als mittels eines elektrischen Heizelements 52 aktiv beheizbarer Drei-Wege-Katalysator 36 ausgeführt. Der dritte Katalysator 32 ist vorzugsweise in einer Unterbodenposition eines Kraftfahrzeuges angeordnet und ebenfalls als Drei-Wege-Katalysator ausgeführt.

Stromabwärts der Turbine 26 des Abgasturboladers 34 und stromaufwärts des ersten Katalysators 28 ist im Abgaskanal 22 eine erste Lambdasonde 38 angeordnet. Die erste Lambdasonde 38 ist vorzugsweise als Breitbandsonde 44 ausgeführt und ermöglicht somit eine quantitative Beurteilung des Verbrennungsluftverhältnisses stromaufwärts des ersten Katalysators 28. Stromabwärts des ersten Katalysators 28 und stromaufwärts des zweiten Katalysators 30 ist im Abgaskanal 22 eine zweite Lambdasonde 40 vorgesehen, welche vorzugsweise als Sprungsonde 46 ausgeführt ist. Stromabwärts des zweiten Katalysators 30 und stromaufwärts des dritten Katalysators 32 ist im Abgaskanal 22 eine dritte Lambdasonde 42 angeordnet, welche vorzugsweise als Sprungsonde 46 ausgeführt ist. Ferner kann im Abgaskanal 22 ein Temperatursensor 48 angeordnet sein, um die Abgastemperatur zu messen und somit die Bauteiltemperatur der Katalysatoren 28, 30, 32 zu berechnen.

Alternativ zu einem elektrischen Heizelement 52, welches dem Katalysator 30, 32 vorgeschaltet ist, kann bei einer nicht zur Erfindung gehörenden Ausführung des aktiv beheizbaren Katalysators 36 als Vier-Wege-Katalysator 54 auch das Filtersubstrat 56 des Partikelfilters 54 elektrisch leitend und somit direkt beheizbar ausgeführt sein.

Der Verbrennungsmotor 10 sowie die Lambdasonden 38, 40, 42 und der Temperatursensor 48 sind über Signalleitungen mit einem Motorsteuergerät 50 verbunden. Anhand der Informationen der Lambdasonden 38, 40, 42 und des Temperatursensors 48 werden die Einspritzmenge, der Einspritzzeitpunkt und der Zündzeitpunkt in den Brennräumen 12 gesteuert, um eine möglichst emissionsarme Verbrennung des Kraftstoff-Luft-Gemischs gewährleisten zu können.

Um die Emissionen des Verbrennungsmotors 10 nach einem Kaltstart zu minimieren ist, die schnelle Bereitstellung eines möglichst großen aktiven Katalysatorvolumens essentiell. Darüber hinaus ist zur Verbesserung der Konvertierungsleistung auch eine Anpassung der stetigen Lambdaregelung mittels einer Trimregelung notwendig, deren Regelstrecke nicht nur, wie bei aus dem Stand der Technik bekannten Lambdaregelungen, auf den ersten Katalysator 28 beschränkt ist, sondern eine Regelung auf das gesamte aktive Katalysatorvolumen ermöglicht. Zur Einbindung einer zusätzlichen Lambdasonde 40, 42 in die Regelstecke der Trimregelung muss der stromaufwärts dieser Lambdasonde 40, 42 angeordnete Katalysator 30, 32 seine Light-Off-Temperatur erreicht haben. Da dies bei einer motorfernen Position des Katalysators 30, 32, insbesondere in einer Unterbodenposition eines Kraftfahrzeuges, nicht in allen Betriebssituationen gewährleistet ist, wird der zweite Katalysator 40 mittels eines elektrischen Heizelements 52 nach dem Motorstart des Verbrennungsmotors 10 oder in schwachlastigen Betriebssituationen des Verbrennungsmotors 10 extern beheizt. Die Heizmaßnahmen können zur Senkung des Gesamtenergiebedarfs und zur Schonung einer Batterie des Kraftfahrzeuges reduziert oder abgeschaltet werden, wenn der motornahe erste Katalysator 28 seine Light-Off-Temperatur erreicht hat und die zweite Lambdasonde 40 stromabwärts des ersten Katalysators 28 zur Lambdaregelung hinzugezogen werden kann. Sobald der aktiv beheizbare Katalysator 36 durch den Motorbetrieb des Verbrennungsmotors 10 seine Light-Off-Temperatur erreicht hat, sollte die Lambdareglung wieder auf die dritte Lambdasonde 42 ausgedehnt werden. Die Realisierung der Variabilität in der Regelstrecke der Lambdaregelung erfordert eine intelligente Detektion des bereits aktiven Katalysatorvolumens. Dies kann beispielsweise durch ein im Motorsteuergerät 50 des Verbrennungsmotors 10 abgelegtes Berechnungsmodell erfolgen.

In Figur 2 ist ein alternatives Ausführungsbeispiel eines erfindungsgemäßen Abgasnachbehandlungssystems dargestellt. Bei im Wesentlichen gleichem Aufbau wie zu Figur 1 ausgeführt, ist in diesem Ausführungsbeispiel stromabwärts des ersten Katalysators 28 und stromaufwärts des zweiten Katalysators 30 ein vierter Katalysator 34 angeordnet. Der vierte Katalysator 34 ist vorzugsweise als Drei-Wege-Katalysator mit einem Washcoat ausgeführt, welcher im Wesentlichen frei von einer sauerstoffspeicherfähigen Komponente ausgeführt ist. Dadurch kann das Katalysatorvolumen erhöht werden, ohne eine zusätzliche Lambdasonde stromabwärts dieses vierten Katalysators zu benötigen. Durch den Washcoat ohne Sauerstoffspeicherfähigkeit ist eine gemeinsame Regelung des vierten Katalysators 34 und des beheizbaren zweiten Katalysators 30, 36 über die dritte Lambdasonde 42 möglich. Alternativ kann auch eine weitere Lambdasonde vorgesehen sein, wobei die Regelstrecke der Lambdaregelung auf die in Strömungsrichtung jeweils letzte Lambdasonde 38, 40, 42 ausgedehnt wird, deren unmittelbar stromaufwärts liegender Katalysator 28, 30, 32 seine Light-Off-Temperatur erreicht hat. Hat keiner der Katalysatoren 28, 30, 32 seine Light-Off-Temperatur erreicht, so erfolgt die Lambdaregelung über die erste Lambdasonde 38. Neben einer verbesserten Konvertierungsleistung durch ein vergrößertes Katalysatorvolumen durch den zusätzlichen vierten Katalysator 34 hat das in Figur 2 vorgeschlagene Abgasnachbehandlungssystem auch den Vorteil einer erhöhten Alterungsbeständigkeit.

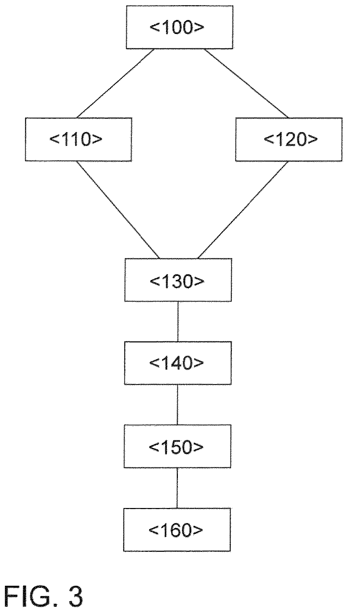

In Figur 3 ist ein Ablaufdiagramm zur Durchführung eines erfindungsgemäßen Verfahrens zur Abgasnachbehandlung eines Verbrennungsmotors 10 mit dem in Figur 1 dargestellten Abgasnachbehandlungssystem gezeigt. Bei einem Kaltstart <100> des Verbrennungsmotors 10 erfolgt die Lambdaregelung zunächst in einem ersten Verfahrensschritt <110> über die auch als Führungssonde bezeichnete erste Lambdasonde 38. Dabei wird das Verbrennungsluftverhältnis des Verbrennungsmotors 10 auf ein stöchiometrisches Verbrennungsluftverhältnis (λ = 1) eingeregelt. Gleichzeitig erfolgt in einem Verfahrensschritt <120> ein Aufheizen des elektrisch beheizbaren Katalysators 36 mit dem Ziel der möglichst schnellen Nutzung dieses Katalysators 36. Hat der elektrisch beheizbare Katalysator 36 seine Light-Off-Temperatur erreicht, was durch eine Temperaturmessung oder ein im Steuergerät 50 abgelegtes Berechnungsmodell ermittelt werden kann, wird die dritte Lambdasonde 42 stromabwärts des elektrisch beheizbaren Katalysators 36 für die Trimregelung genutzt. Hat der elektrisch beheizbare Katalysator 36 seine Light-Off-Temperatur erreicht, wird in einem nächsten Verfahrensschritt <130> das Beheizen dieses Katalysators 36 deaktiviert. Dies kann insbesondere in einer Schwachlastphase des Verbrennungsmotors 10 zu einem Abkühlen des elektrisch beheizbaren Katalysators 36 unter seine Light-Off-Temperatur führen. In diesem Fall wird die Lambdaregelung in einem nächsten Verfahrensschritt <140> auf die zweite Lambdasonde 40 stromabwärts des motornahen ersten Katalysators 28 umgeschaltet. Wird der elektrisch beheizbare Katalysator 36 im weiteren Betrieb <150> des Verbrennungsmotors 10 durch das Abgas des Verbrennungsmotors 10 wieder auf seine Light-Off-Temperatur aufgeheizt, so wird die Lambdaregelung in einem Verfahrensschritt <160> wieder auf die dritte Lambdasonde 42 verstellt. Der dritte Katalysator 32 in der Abgasanlage 20 dient der Verhinderung von Emissionsdurchbrüchen während der On-Board-Diagnose der dritten Lambdasonde. Dieser dritte Katalysator 32 ist nicht aktiv in die Lambdaregelung mit eingebunden.

Wird der Verbrennungsmotor 10 in einem Schwachlastbetrieb betrieben, kann der elektrisch beheizbare Katalysator 36 durch ein erneutes Aktivieren des elektrischen Heizelements 52 wieder auf seine Light-Off-Temperatur aufgeheizt werden. Somit kann die katalytische Aktivität dieses Katalysators 36 auch in Schwachlastphasen sichergestellt werden. Hat der elektrisch beheizbare Katalysator 36 wieder seine Light-Off-Temperatur erreicht, kann die Lambdaregelung wieder auf die dritte Lambdasonde 42 ausgedehnt werden. Mit dieser Methode kann das aktive Katalysatorvolumen innerhalb der Regelstrecke der Lambdaregelung maximiert werden.

### Bezugszeichenliste

- 10: Verbrennungsmotor
- 12: Brennraum
- 14: Zündkerze
- 16: Einlass
- 18: Auslass

- 20: Abgasanlage
- 22: Abgaskanal
- 24: Abgasturbolader
- 26: Turbine
- 28: erster Katalysator

- 30: zweiter Katalysator
- 32: dritter Katalysator
- 34: vierter Katalysator
- 36: aktiv beheizbarer Katalysator
- 38: erste Lambdasonde

- 40: zweite Lambdasonde
- 42: dritte Lambdasonde
- 44: Breitbandsonde
- 46: Sprungsonde
- 48: Temperatursensor

- 50: Motorsteuergerät
- 52: elektrisches Heizelement
- 54: Vier-Wege-Katalysator
- 56: Filtersubstrat

## Patentansprüche

1. Verfahren zur Abgasnachbehandlung eines Verbrennungsmotors (10), dessen Auslass (18) mit einer Abgasanlage (20) verbunden ist, wobei in der Abgasanlage (20) in Strömungsrichtung eines Abgases durch die Abgasanlage (20) ein erster Katalysator (28), stromabwärts des ersten Katalysators (28) ein zweiter Katalysator (30) und stromabwärts des zweiten Katalysator (30) ein dritter Katalysator (32) angeordnet sind, wobei in einem Abgaskanal (22) der Abgasanlage (20) stromaufwärts des ersten Katalysators (28) eine erste Lambdasonde (38) und stromabwärts des ersten Katalysators (28) und stromaufwärts des zweiten Katalysators (30) eine zweite Lambdasonde (40) angeordnet ist, wobei stromabwärts des zweiten Katalysators (30) und stromaufwärts des dritten Katalysators (32) eine dritte Lambdasonde (42) angeordnet ist, wobei der erste Katalysator (28) und der dritte Katalysator (32) als Drei-Wege-Katalysatoren ausgeführt sind, und wobei der zweite Katalysator (30) als ein mittels eines elektrischen Heizelements (52) aktiv elektrisch beheizbarer Drei-Wege-Katalysator (36) ausgeführt ist, umfassend folgende Schritte:
- Aktives Beheizen des zweiten Katalysators (30) stromabwärts des ersten Katalysators (28),
- Vergleichen der Bauteiltemperatur des ersten Katalysators (28), des zweiten Katalysators (30) und des dritten Katalysators (32) mit der jeweiligen Light-Off-Temperatur des Katalysators (28, 30, 32,),
- Regeln des Verbrennungsluftverhältnisses über einer Lambdaregelung des Verbrennungsmotors (10) mittels derjenigen Lambdasonde (38, 40, 42) stromabwärts des letzten Drei-Wege-Katalysators (28, 30, 32), welcher seine Light-Off-Temperatur erreicht hat, wobei
- die Lambdaregelung über die erste Lambdasonde (38) erfolgt, wenn keiner der Katalysatoren (28, 30, 32) seine Light-Off-Temperatur erreicht hat, und wobei
- die Lambdaregelung auf die Lambdasonde (40) stromabwärts des zweiten Katalysators (30) ausgeweitet wird, sobald dieser Katalysator (30) seine Light-Off-Temperatur erreicht hat.

2. Verfahren zur Abgasnachbehandlung nach Anspruch 1, **dadurch gekennzeichnet, dass** ab einem Motorstart des Verbrennungsmotors (10) eine Lambdaregelung durch die erste Lambdasonde (38) erfolgt.

3. Verfahren zur Abgasnachbehandlung nach einem der Ansprüche 1 oder 2, **dadurch gekennzeichnet, dass** das aktive Beheizen eingestellt wird, sobald der zweite Katalysator (30) seine Light-Off-Temperatur erreicht hat.

4. Verfahren zur Abgasnachbehandlung nach einem der Ansprüche 1 bis 3, **dadurch gekennzeichnet, dass** die Lambdaregelung durch die erste Lambdasonde (38) und die zweite Lambdasonde (40) stromaufwärts und stromabwärts des ersten Katalysators (28) erfolgt, wenn im Betrieb des Verbrennungsmotors (10) die Temperatur des aktiv beheizbaren Katalysators (36) unter seine Light-Off-Temperatur absinkt.

5. Verfahren zur Abgasnachbehandlung nach Anspruch 4, **dadurch gekennzeichnet, dass** das aktive Beheizen wieder aktiviert wird, wenn die Temperatur des aktiv beheizbaren Katalysators (36) im Betrieb des Verbrennungsmotors (10) unter seine Light-Off-Temperatur abgefallen ist.

6. Verfahren zur Abgasnachbehandlung nach einem der Ansprüche 1 bis 5, **dadurch gekennzeichnet, dass** ein zu erwartendes Lastprofil des Verbrennungsmotors (10) ermittelt wird und der aktiv beheizbare Katalysator (36) beheizt wird, wenn anhand des zu erwartenden Lastprofils ein Absinken der Bauteiltemperatur des aktiv beheizbaren Katalysators (36) unter seine Light-Off-Temperatur anzunehmen ist.

7. Abgasnachbehandlungssystem für einen Verbrennungsmotor (10), welches an einen Auslass (18) des Verbrennungsmotors (10) anschließbar ist, wobei das Abgasnachbehandlungssystem eine Abgasanlage (20) umfasst, in welcher in Strömungsrichtung eines Abgases durch die Abgasanlage (20) ein erster Katalysator (28), stromabwärts des ersten Katalysators (28) ein zweiter Katalysator (30) und stromabwärts des zweiten Katalysators (30) ein dritter Katalysator (32) angeordnet sind, wobei in einem Abgaskanal (22) der Abgasanlage (20) stromaufwärts des ersten Katalysators (30) eine erste Lambdasonde (38) und stromabwärts des ersten Katalysators (30) und stromaufwärts des zweiten Katalysators (30) eine zweite Lambdasonde (40) angeordnet ist, und wobei stromabwärts des zweiten Katalysators (30) und stromaufwärts des dritten Katalysators (32) eine dritte Lambdasonde (42) angeordnet sind, wobei der erste Katalysator (28) und der dritte Katalysator (32) als Drei-Wege-Katalysatoren ausgeführt sind, und wobei der zweite Katalysator (30) als ein mittels eines elektrischen Heizelements (52) aktiv elektrisch beheizbarer Drei-Wege-Katalysator (36) ausgeführt ist, **dadurch gekennzeichnet, dass** das Abgasnachbehandlungssystem ein Steuergerät (50) umfasst, welches dazu eingerichtet ist, ein Verfahren nach einem der Ansprüche 1 bis 6 durchzuführen, wenn ein maschinenlesbarer Programmcode durch das Steuergerät (50) ausgeführt wird.

8. Abgasnachbehandlungssystem nach Anspruch 7, **dadurch gekennzeichnet, dass** stromabwärts des ersten Katalysators (28) und stromaufwärts des zweiten Katalysators (30) ein vierter Katalysator (34) angeordnet ist.

9. Abgasnachbehandlungssystem nach Anspruch 8, **dadurch gekennzeichnet, dass** der vierte Katalysator (34) im Wesentlichen frei von einer sauerstoffspeicherfähigen Komponente ausgeführt ist.

10. Abgasnachbehandlungssystem nach einem der Ansprüche 7 bis 9, **dadurch gekennzeichnet, dass** die erste Lambdasonde (38) als Breitbandsonde (44) und die weiteren Lambdasonden (40, 42) jeweils als Sprungsonde (46) ausgeführt sind.

11. Abgasnachbehandlungssystem nach einem der Ansprüche 7 bis 10, **dadurch gekennzeichnet, dass** in der Abgasanlage (20) ein Temperatursensor (48) angeordnet ist.

## Claims

1. Method for exhaust gas aftertreatment of an internal combustion engine (10), the outlet (18) of which is connected to an exhaust gas system (20), wherein in the exhaust gas system (20) are disposed, in the direction of an exhaust gas flow through the exhaust gas system (20), a first catalytic converter (28), a second catalytic converter (30) downstream of the first catalytic converter (28) and a third catalytic converter (32) downstream of the second catalytic converter (30), wherein in an exhaust duct (22) of the exhaust gas system (20) are disposed a first lambda sensor (38) upstream of the first catalytic converter (28) and a second lambda sensor (40) downstream of the first catalytic converter (28) and upstream of the second catalytic converter (30), wherein a third lambda sensor (42) is disposed downstream of the second catalytic converter (30) and upstream of the third catalytic converter (32), wherein the first catalytic converter (28) and the third catalytic converter (32) are designed as three-way catalytic converters, and wherein the second catalytic converter (30) is designed as a three-way catalytic converter (36) which can be actively heated electrically by means of an electrical heating element (52), comprising the following steps:
- actively heating the second catalytic converter (30) downstream of the first catalytic converter (28),
- comparing the component temperature of the first catalytic converter (28), the second catalytic converter (30) and the third catalytic converter (32) with the relevant light-off temperature of the catalytic converter (28, 30, 32),
- controlling the air-fuel ratio via a lambda closed-loop control of the internal combustion engine (10) by means of the lambda sensor (38, 40, 42) downstream of the last three-way catalytic converter (28, 30, 32) which has reached its light-off temperature, wherein
- the lambda closed-loop control is carried out via the first lambda sensor (38) when none of the catalytic converters (28, 30, 32) has reached its light-off temperature, and wherein
- the lambda closed-loop control is extended to the lambda sensor (40) downstream of the second catalytic converter (30) as soon as this catalytic converter (30) has reached its light-off temperature.

2. Method for exhaust gas aftertreatment according to claim 1,
**characterized in that** from an engine start of the internal combustion engine (10) a lambda closed-loop control is carried out by the first lambda sensor (38).

3. Method for exhaust gas aftertreatment according to either claim 1 or claim 2, **characterized in that** the active heating is stopped as soon as the second catalytic converter (30) has reached its light-off temperature.

4. Method for exhaust gas aftertreatment according to any of claims 1 to 3, **characterized in that** the lambda closed-loop control is carried out by the first lambda sensor (38) and the second lambda sensor (40) upstream and downstream of the first catalytic converter (28) when the temperature of the actively heatable catalytic converter (36) drops below its light-off temperature during operation of the internal combustion engine (10).

5. Method for exhaust gas aftertreatment according to claim 4,
**characterized in that** the active heating is reactivated when the temperature of the actively heatable catalytic converter (36) has fallen below its light-off temperature during operation of the internal combustion engine (10).

6. Method for exhaust gas aftertreatment according to any of claims 1 to 5, **characterized in that** an expected load profile of the internal combustion engine (10) is determined and the actively heatable catalytic converter (36) is heated if, based on the expected load profile, a drop in the component temperature of the actively heatable catalytic converter (36) below its light-off temperature can be assumed.

7. Exhaust gas aftertreatment system for an internal combustion engine (10), which can be connected to an outlet (18) of the internal combustion engine (10), wherein the exhaust gas aftertreatment system comprises an exhaust gas system (20), in which are disposed, in the direction of an exhaust gas flow through the exhaust gas system (20), a first catalytic converter (28), a second catalytic converter (30) downstream of the first catalytic converter (28) and a third catalytic converter (32) downstream of the second catalytic converter (30), wherein in an exhaust duct (22) of the exhaust gas system (20) are disposed a first lambda sensor (38) upstream of the first catalytic converter (30) and a second lambda sensor (40) downstream of the first catalytic converter (30) and upstream of the second catalytic converter (30), and wherein a third lambda sensor (42) is disposed downstream of the second catalytic converter (30) and upstream of the third catalytic converter (32), wherein the first catalytic converter (28) and the third catalytic converter (32) are designed as three-way catalytic converters, and wherein the second catalytic converter (30) is designed as a three-way catalytic converter (36) which can be actively heated electrically by means of an electrical heating element (52), **characterized in that** the exhaust gas aftertreatment system comprises an open-loop control unit (50) which is configured to carry out a method according to any of claims 1 to 6 when a machine-readable program code is executed by the open-loop control unit (50).

8. Exhaust gas aftertreatment system according to claim 7,
**characterized in that** a fourth catalytic converter (34) is disposed downstream of the first catalytic converter (28) and upstream of the second catalytic converter (30).

9. Exhaust gas aftertreatment system according to claim 8,
**characterized in that** the fourth catalytic converter (34) is designed substantially free of a component capable of storing oxygen.

10. Exhaust gas aftertreatment system according to any of claims 7 to 9, **characterized in that** the first lambda sensor (38) is designed as a broadband lambda sensor (44) and the further lambda sensors (40, 42) are each designed as binary lambda sensors (46).

11. Exhaust gas aftertreatment system according to any of claims 7 to 10, **characterized in that** a temperature sensor (48) is arranged in the exhaust gas system (20).

## Revendications

1. Procédé pour le post-traitement des gaz d'échappement d'un moteur à combustion interne (10) dont l'échappement (18) est relié à un système d'échappement (20), dans lequel un premier catalyseur (28), un deuxième catalyseur (30) en aval du premier catalyseur (28) et un troisième catalyseur (32) en aval du deuxième catalyseur (30) sont disposés dans le système d'échappement (20) dans le sens d'écoulement d'un gaz d'échappement à travers le système d'échappement (20), dans lequel une première sonde lambda (38) est disposée dans un canal d'échappement (22) du système d'échappement (20) en amont du premier catalyseur (28) et une deuxième sonde lambda (40) est disposée en aval du premier catalyseur (28) et en amont du deuxième catalyseur (30), dans lequel une troisième sonde lambda (42) est disposée en aval du deuxième catalyseur (30) et en amont du troisième catalyseur (32), dans lequel le premier catalyseur (28) et le troisième catalyseur (32) sont réalisés sous forme de catalyseurs à trois voies, et dans lequel le deuxième catalyseur (30) est réalisé sous forme de catalyseur à trois voies (36) pouvant être chauffé électriquement de manière active à l'aide d'un élément de chauffage électrique (52), comprenant les étapes suivantes :
- chauffage actif du deuxième catalyseur (30) en aval du premier catalyseur (28),
- comparaison de la température de composant du premier catalyseur (28), du deuxième catalyseur (30) et du troisième catalyseur (32) avec la température d'amorçage respective du catalyseur (28, 30, 32),
- régulation du rapport d'air de combustion par l'intermédiaire d'une régulation lambda du moteur à combustion interne (10) à l'aide de la sonde lambda (38, 40, 42) en aval du dernier catalyseur à trois voies (28, 30, 32) qui a atteint sa température d'amorçage, dans lequel
- la régulation lambda s'effectue par l'intermédiaire de la première sonde lambda (38) lorsqu'aucun des catalyseurs (28, 30, 32) n'a atteint sa température d'amorçage, et dans lequel
- la régulation lambda est étendue à la sonde lambda (40) en aval du deuxième catalyseur (30) dès que ce catalyseur (30) a atteint sa température d'amorçage.

2. Procédé pour le post-traitement des gaz d'échappement selon la revendication 1, **caractérisé en ce qu'**une régulation lambda est effectuée par la première sonde lambda (38) à partir d'un démarrage de moteur du moteur à combustion interne (10).

3. Procédé pour le post-traitement des gaz d'échappement selon l'une des revendications 1 ou 2, **caractérisé en ce que** le chauffage actif est arrêté dès que le deuxième catalyseur (30) a atteint sa température d'amorçage.

4. Procédé pour le post-traitement des gaz d'échappement selon l'une des revendications 1 à 3, **caractérisé en ce que** la régulation lambda est effectuée par la première sonde lambda (38) et la deuxième sonde lambda (40) en amont et en aval du premier catalyseur (28) lorsque, pendant le fonctionnement du moteur à combustion interne (10), la température du catalyseur (36) pouvant être chauffé activement baisse au-dessous de sa température d'amorçage.

5. Procédé pour le post-traitement des gaz d'échappement selon la revendication 4, **caractérisé en ce que** le chauffage actif est réactivé lorsque la température du catalyseur (36) pouvant être chauffé activement est tombée au-dessous de sa température d'amorçage pendant le fonctionnement du moteur à combustion interne (10).

6. Procédé pour le post-traitement des gaz d'échappement selon l'une des revendications 1 à 5, **caractérisé en ce qu'**un profil de charge attendu du moteur à combustion interne (10) est déterminé et le catalyseur (36) pouvant être chauffé activement est chauffé si, à l'aide du profil de charge attendu, on peut supposer une baisse de la température de composant du catalyseur (36) pouvant être chauffé activement au-dessous de sa température d'amorçage.

7. Système pour le post-traitement des gaz d'échappement pour un moteur à combustion interne (10), qui peut être relié à un échappement (18) du moteur à combustion interne (10), dans lequel le système pour le post-traitement des gaz d'échappement comprend un système d'échappement (20) dans lequel, dans le sens d'écoulement d'un gaz d'échappement à travers le système d'échappement (20), un premier catalyseur (28), un deuxième catalyseur (30) en aval du premier catalyseur (28) et un troisième catalyseur (32) en aval du deuxième catalyseur (30) sont disposés, dans lequel une première sonde lambda (38) est disposée dans un canal d'échappement (22) du système d'échappement (20) en amont du premier catalyseur (30) et une deuxième sonde lambda (40) est disposée en aval du premier catalyseur (30) et en amont du deuxième catalyseur (30), et dans lequel une troisième sonde lambda (42) est disposée en aval du deuxième catalyseur (30) et en amont du troisième catalyseur (32), dans lequel le premier catalyseur (28) et le troisième catalyseur (32) sont réalisés sous forme de catalyseurs à trois voies, et dans lequel le deuxième catalyseur (30) est réalisé sous forme de catalyseur à trois voies (36) pouvant être chauffé électriquement de manière active à l'aide d'un élément de chauffage électrique (52), **caractérisé en ce que** le système pour le post-traitement des gaz d'échappement comprend un appareil de commande (50) qui est conçu pour exécuter un procédé selon l'une des revendications 1 à 6 lorsqu'un code de programme lisible par machine est exécuté par l'appareil de commande (50).

8. Système pour le post-traitement des gaz d'échappement selon la revendication 7, **caractérisé en ce qu'**un quatrième catalyseur (34) est disposé en aval du premier catalyseur (28) et en amont du deuxième catalyseur (30).

9. Système pour le post-traitement des gaz d'échappement selon la revendication 8, **caractérisé en ce que** le quatrième catalyseur (34) est réalisé sensiblement sans composant capable de stocker de l'oxygène.

10. Système pour le post-traitement des gaz d'échappement selon l'une des revendications 7 à 9, **caractérisé en ce que** la première sonde lambda (38) est réalisée sous forme de sonde à large bande (44) et les autres sondes lambda (40, 42) sont réalisées respectivement sous forme de sonde à saut (46).

11. Système pour le post-traitement des gaz d'échappement selon l'une des revendications 7 à 10, **caractérisé en ce que,** dans le système d'échappement (20), est disposé un capteur de température (48).
